# EUROPÄISCHE PATENTSCHRIFT

(11) **EP 1 077 803 B1**
(45) Veröffentlichungstag und Bekanntmachung des Hinweises auf die Patenterteilung: **31.07.2002**
(21) Anmeldenummer: 99934504.4
(22) Anmeldetag: 17.05.1999
(51) Int. Cl.: B29C 67/00, B22F 3/105

(54) **VERFAHREN UND VORRICHTUNG ZUR HERSTELLUNG METALLISCHER UND NICHTMETALLISCHER FUNKTIONSMUSTER**
METHOD AND DEVICE FOR PRODUCING METALLIC AND NON-METALLIC FUNCTIONAL PROTOTYPES
PROCEDE ET DISPOSITIF POUR LA FABRICATION DE PROTOTYPES FONCTIONNELS METALLIQUES ET NON METALLIQUES

(30) Priorität: 15.05.1998 DE 19821810
(43) Veröffentlichungstag der Anmeldung: 28.02.2001
(73) Patentinhaber: APPLIKATIONS- UND TECHNIKZENTRUM FÜR ENERGIEVERFAHRENS-, UMWELT-, UND STRÖMUNGSTECHNIK, 92237 Sulzbach-Rosenberg (DE)
(72) Erfinder: LANG, Adolf, D-90552 Röthenbach (DE); BINDER, Dietmar, D-96047 Bamberg (DE); HARTRAMPF, Martin, D-92237 Sulzbach-Rosenberg (DE)
(74) Vertreter: Gassner, Wolfgang, Dr.
(86) Internationale Anmeldenummer: DE9901465
(87) Internationale Veröffentlichungsnummer: WO9959800

(56) Entgegenhaltungen:
- EP-A- 0 289 116
- WO-A-92/08592
- WO-A-96/09132
- DE-A- 4 400 523
- DE-C- 19 514 740

## Beschreibung

Die Erfindung betrifft ein Verfahren und eine Vorrichtung zur Herstellung von Funktionsmustern nach dem Oberbegriff der Ansprüche 1 und 8.

Die rasche Herstellung von Prototypen, das sogenannte "rapid prototyping" findet aufgrund der immer kürzer werdenden Produktentwicklungszeiten und der Erhöhung der Produktvielfalt für kleinere Losgrößen im Werkzeug- und Formenbau eine breite Anwendung. Dabei werden sowohl nichtmetallische Materialien zu rein visuellen und haptischen Funktionen von Prototypen verwendet, als auch seit einigen Jahren metallische und nichtmetallische Ausgangsmaterialien mit dem Ziel, Werkzeuge für Prototypen direkt aus den CAD-Daten zu erzeugen (= "rapid tooling"). Die Verarbeitung derartiger Materialien für Werkzeuge, die meist in Pulverform vorliegen, erfolgt durch lasergestützte Rapid-Prototyping/Tooling-Verfahren. Man unterscheidet bei diesen Verfahren das Lasergenerieren und das Selektive Lasersintern.

Das Lasergenerieren ist prinzipiell mit einem Laserbeschichtungsprozeß oder auch mit einem Laserauftragsschweißen vergleichbar, d.h. durch teilweises oder vollständiges Aufschmelzen des Ausgangsmaterials und sukzessives Nebeneinander- und Übereinanderlegen einzelner Beschichtungsbahnen wird das zu erzeugende Musterteil generiert. Die erzielbaren Genauigkeiten sind jedoch zu gering, um den Anforderungen an Werkzeuge für Prototypen zu genügen.

Beim Prozeß des Selektiven Lasersinterns werden in einem Pulverbett vorhandene Pulverpartikel mit Hilfe des Laserstrahls teilweise an- oder aufgeschmolzen, welche sich nach Abkühlung zu einer festen Schicht verbinden. Die bekannten Vorrichtungen zum Selektiven Lasersintern bestehen aus einem Laser, einer Strahlformungs- und Strahlführungseinheit, einem Rechner für die Softwareaufbereitung und -verarbeitung und einer Einheit für die Pulverdosierung und Bauplattform. Der Laserstrahl wird über eine Ablenkeinrichtung, beispielsweise eine Drehspiegeleinheit, und eine Planfeldlinse auf die Bauplattform gerichtet. Die Rechnereinheit steuert die Ablenkeinrichtung entsprechend den vorgegebenen CAD-Daten. Die Bauplattform trägt u.a. die Unterlage, auf der das Bauteil gebaut wird; sie ist nivellierbar. Eine weitere Möglichkeit besteht darin, ohne Unterlage zu arbeiten, wobei das Bauteil dann durch das umgebende Material gestützt wird. Auch bei dieser Verfahrensvariante muß die Bauplattform nivellierbar bzw. in der Höhe verstellbar sein. Für die Bereitstellung von neuem Material dient ein ebenfalls nivellierbarer Pulvervorratsbehälter und eine Abstreifeinheit in Form eines Schiebers oder einer Walze. Eine solche Vorrichtung ist beispielsweise aus der EP 0 287 657 B1 bekannt.

Z.B. nach A. Gebhardt: Rapid Prototyping, Carl Hanser Verlag München, Wien, 1996, 115 kann durch'Wiederholen der im folgenden genannten Prozeßschritte sukzessive das Bauteil erzeugt werden:

Zuerst wird die die Bauplattform entsprechend der gewünschten aufzubringenden Pulverschichtdicke abgesenkt. Der Pulvervorratsbehälter wird soweit angehoben, daß eine ausreichende Pulvermenge für die Herstellung einer gleichmäßigen Pulverschichtdicke vorhanden ist.

Anschließend wird das Pulver durch eine Abstreifeinheit auf das Bauteil aufgebracht. Bei Vorrichtungen, bei denen auf beiden Seiten Pulvervorratsbehälter angebracht sind, genügt eine Hinbewegung der Abstreifeinheit. Bei Vorrichtungen mit nur einem Pulvervorratsbehälter, ist auf dessen gegenüberliegender Seite ein Pulverauffangbehälter angebracht, der überschüssiges Pulver auffängt. Dabei vollzieht die Abstreifeinheit eine Hin- und Herbewegung.

Es folgt die Bestrahlung mit dem Laser an den gewünschten Stellen, die durch die aufbereiteten CAD-Daten vorgegeben sind. Die Leistungsdichte der als Wärmequelle dienenden Laserstrahlung wird nach dem zur Anwendung kommenden Pulvermaterial derart eingestellt und zugeführt, daß der erzeugte Temperaturzyklus einen Teil des Pulvermaterials an- oder aufschmilzt, wodurch das Bauteil eine strukturelle Festigkeit bzw. Grünfestigkeit erhält.

Oxidationserscheinungen der Schmelze können das Sinterergebnis besonders bei metallischen und keramischen Ausgangsmaterialien negativ beeinflussen. Um diesem Nachteil entgegenzuwirken, kann das Aufschmelzen mittels Laserstrahlung bzw. der Selektive Lasersinterprozeß in einer Bearbeitungskammer unter Inertgas- oder speziellen Metallgasatmosphären erfolgen. So wird beispielsweise in der Patentschrift DE 44 00 523 C2 eine Zufuhr von Inertgas in ein Gehäuse, welches die Unterlage und die Aufbringvorrichtung dicht umgibt, erwähnt. Das Sintern des Pulvers mittels Laserstrahlung kann gemäß der WO 96 09132 auch in einer Metallgasatmosphäre erfolgen, die beispielsweise eine chemische Verbindung, mit einem Element der EisenGruppe wie Ni enthält (z.B. Nickelbromid, Nickeltetracarbonyl usw.). In dieser Patentschrift werden weitere Patente oder Veröffentlichungen erwähnt, die mit abweichenden Atmosphären arbeiten. So wird in der Veröffentlichung von Manthiram, Bourell und Marcus mit dem Titel "Nanoface Materials in Solid Freeform Fabrication" das Arbeiten in einer Methanatmosphäre erwähnt.

Die bekannten Vorrichtungen für das Rapid Prototyping bzw. Rapid Tooling sind so ausgebildet, daß der Bearbeitungsraum und der Pulvervorrats- und/oder Pulverauffangbehälter innerhalb eines Gehäuses aufgenommen sind. Dadurch kann die Atmosphäre in der Umgebung des Pulvers durch Einströmen von Schutzgas oder anderen Prozeßgasen zwar verdünnt werden. Nachteiligerweise kann jedoch keine vollständig oxidationsfreie Atmosphäre erzeugt werden. Problematisch sind hierbei vor allem die an den Pulverpartikeln im Pulvervorratsbehälter befindlichen Sauerstoff- und Wassermoleküle. Diese lassen sich durch die nach dem Stand der bekannte seitliche Gaseinströmung oberhalb der Pulverschüttung nicht entfernen. Darüber hinaus führt die bisherige seitliche Einströmung von Schutzgas oder anderen Prozeßgasen zu Wirbelbildungen durch den Aufprall an den Wänden des festen Gehäuses, was der Ausbildung einer sauerstoffarmen Atmosphäre entgegenwirkt. Um eine definierte und kontrollierbare Atmosphäre zu erreichen, ist daher nach dem derzeitigen Kenntnisstand eine aufwendige Vakuumtechnik erforderlich, welche eine Kapselung des Bearbeitungsraums mit Pulvervorratsbehälter und/oder Pulverauffangbehälter vorsieht.

Ein gattungsgemäßes Verfahren sowie eine Vorrichtung sind aus der EP 0 289 116 bekannt. Bei dem bekannten Verfahren handelt es sich um ein Wirbelbettverfahren. Das Funktionsmuster wird dabei aus einem mittels einer Gasströmung fluidisierten Pulverbett erzeugt.

Die WO 92/08592 beschreibt ein Verfahren, bei dem die Oberfläche eines Bauteils mit Prozeßgas beaufschlagt wird. Auch aus der DE 44 00 523 A1 und der WO 96/09132 sind Verfahren zur Herstellung von Funktionsmustern mittels Lasersintern unter Prozeßgasatmosphäre bekannt.

Aus der DE 195 14 740 C1 ist zur Herstellung von Funktionsmustern ein Schichtbettverfahren bekannt, bei dem auf eine Bauplattform schichtweise Pulver aufgetragen wird.

Aufgabe der Erfindung ist es, die Nachteile nach dem Stand der Technik zu beseitigen. Es sollen insbesondere ein möglichst einfaches Verfahren sowie eine einfache Vorrichtung angegeben werden, mit denen die Herstellung maßhaltiger und fehlerfreier Bauteile mittels Lasersintern möglich ist.

Diese Aufgabe wird durch die Merkmale der Ansprüche 1 und 8 gelöst. Zweckmäßige Ausgestaltungen ergeben sich aus den Ansprüchen 2 bis 7 und 9 bis 20.

Nach Maßgabe der Erfindung ist vorgesehen, daß das Pulver schichtweise auf die Bauplattform aufgetragen und das gasdurchläßige Medium derart durchströmt wird, daß das Prozeßgas im wesentlichen laminar in den Bearbeitungsraum gelangt. - Der Behandlungsraum wird hier also von der Seite her durchströmt, die der mit dem Laserstrahl bestrahlten Seite der Pulverschüttung gegenüberliegt.

Mit dem vorgeschlagenen Verfahren können maßhaltige und fehlerfreie metallische Werkzeuge und metallische und nichtmetallische Funktionsmuster durch lasergestützte rapid prototyping-Verfahren erzeugt werden. Es wird vorteilhafterweise die Pulverschüttung von Umgebungsatmosphäre und Feuchtigkeit gereinigt und der gesamte Bearbeitungsraum sowie gegebenenfalls vorhandene Pulvervorratsbehälter unter Prozeßgasatmosphäre gesetzt. Auf Vakuumkapselungstechniken kann somit verzichtet werden.

Nachfolgend werden anhand der Zeichnung Ausführungsbeispiele der Erfindung näher erläutert. Es zeigen
Fig. 1 eine schematische Querschnittsansicht einer ersten Vorrichtung,
Fig. 2 eine schematische Querschnittsansicht einer zweiten Vorrichtung und
Fig. 3 eine schematische Querschnittsansicht einer dritten Vorrichtung.

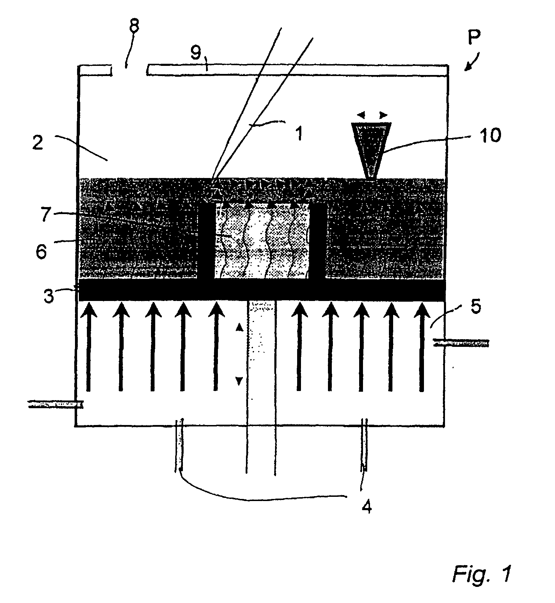

In den Fig. 1 bis 3 ist mit den Bezugszeichen P allgemein eine Prozeßkammer bezeichnet. Ein Laserstrahl 1 ist in einen von der Prozeßkammer P umgebenen Behandlungsraum 2 gerichtet.

Der Behandlungsraum 3 weist ein höhenverstellbares gasdurchlässiges Medium 3, z.B. ein Sintermetall, auf. Durch das gasdurchlässige Medium 3 wird ein Vorraum 5 abgeteilt, der mit mehreren Gasanschlüssen 4 zur Zufuhr von Prozeßgas versehen ist. Das gasdurchlässige Medium 3 dient hier direkt als Bauplattform. Es kann aber auch sein, daß eine besondere Bauplattform auf dem gasdurchlässigen Medium abgestützt ist. Das Pulver ist mit 6, das gesinterte Bauteil ist mit 7 bezeichnet. Der Bearbeitungsraum 2 ist mit einem Fenster 9 verschlossen, das mit mindestens einem gasdurchlässigen Auslaß 8 versehen ist. Beim Auslaß 8 kann es sich um eine Bohrung, ein Filtermaterial oder eine gasdurchlässige Membran handeln. Wird als Schutzgas beispielsweise Argon verwendet, ist eine Abdeckung bzw. eine Fenster 9 ist nicht notwendig. Argon ist schwerer als Luft; es verbleibt im Bearbeitungsraum 2. Zum Aufbringen der Pulverschicht ist eine hin- und herbewegbare Abstreifeinheit 10 vorgesehen.

Die Abstreifeinheit 10 kann gleichzeitig als Pulvervorratsbehälter 11 dienen.

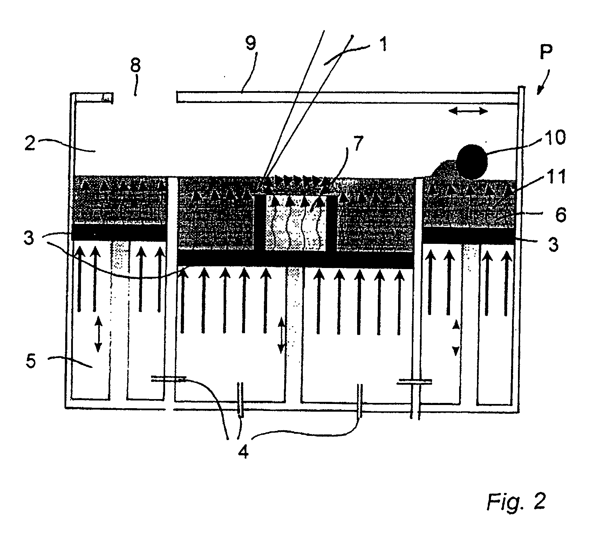

In Fig. 2 ist eine Vorrichtung mit zwei, vorzugsweise höhenverstellbare, Pulvervorratsbehältern 11 gezeigt. Über einen ähnlichen Aufbau wie in Fig. 1 können die separaten Pulvervorratsbehälter 11 mit Prozeßgas gleichzeitig durchströmt werden, welches ebenfalls einen Trocknungs- und Reinigungseffekt des Pulvers 6 bewirkt. Die Prozeßgaszuführung erfolgt ebenfalls von unten über ein gasdurchlässiges Medium 3 und strömt durch das Bauteil 7 und das Pulver 6 in den Bearbeitungsraum 2.

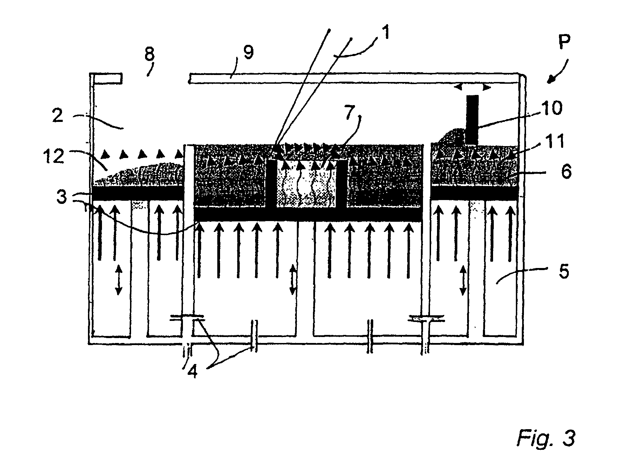

Weiterhin ist es möglich, einen Pulverauffangbehälter 12, wie es in Fig. 3 gezeigt ist, von unten mit Prozeßgas zu durchströmen.

Die Funktion der Vorrichtung ist folgende: Der Laserstrahl 1 wird durch eine Drehspiegeleinheit entsprechend den aufbereiteten CAD-Daten abgelenkt. Die Prozeßkammer P wird durch ein gasdurchlässiges Medium 3 (z.B. ein Gewebelaminatfilter mit einer Maschenweite von 20 µm) in einen Vor- 5 und einen Bearbeitungsraum 2 aufgeteit. Das Schutzgas wird zuerst in den Vorraum 5 von unter und/oder der Seite 4 eingeleitet. Anschließend stömt das Schutzgas vom Vorraum 5 von unten durch ein gasdurchlässiges Medium 3 in den Bearbeitungsraum 2. Dadurch wird gewährleistet, daß das Schutzgas im wesentlichen laminar, d.h. im wesentlichen ohne Turbulenzen, in den Bearbeitungsraum gelangt. Die Bildung von Wirbeln im Bearbeitungsraum 2 und ein dadurch bedingtes Ansaugen von Luft bzw. Luftsauerstoff vom nach oben hin offenen oder teildurchlässigen Bearbeitungsraum 2 wird verhindert. Das Schutzgas strömt dabei auch durch das bereits gesinterte Sintermaterial 6 und setzt den gesamten Bearbeitungsraum 2 unter Schutzgas. Zusätzlich wird durch diesen Aufbau gewährleistet, daß das Pulver 6 und das Bauteil 7, welche sich im Bearbeitungsraum 2 befinden, getrocknet und gereinigt werden, indem das Schutzgas durch das Pulver 6 und das Bauteil 7 strömen und anhaftendes Wasser und Fremdgase mitreißt. Das Verfahren kann also ohne aufwendige Vakuumkapselungstechniken unter Schutzgas durchgeführt werden.

### Bezugszeichenliste

- P: Prozeßkammer
- 1: Laserstrahl
- 2: Bearbeitungsraum
- 3: gasdurchlässiges Medium
- 4: Gasanschluß
- 5: Vorraum
- 6: Pulver
- 7: Bauteil
- 8: Auslaß
- 9: Fenster
- 10: Abstreifeinheit
- 11: Pulvervorratsbehälter
- 12: Pulverauffangbehälter

## Patentansprüche

1. Verfahren zur Herstellung von Funktionsmustern unter einer Prozeßgasatmosphäre, wobei in einem Bearbeitungsraum (2) auf eine Bauplattform Pulver aufgebracht und mittels Laserstrahlung (1) an durch CAD-Daten vorgegebenen Stellen ein ein partielles oder vollständiges Aufschmelzen des Pulvers bewirkender Temperaturzyklus erzeugt wird, wobei der Bearbeitungsraum (2) von unten durch ein festes gasdurchlässiges Medium (3) mit Prozeßgäs durchströmt wird, und das Prozeßgas stromabwärts des gasdurchlässigen Mediums (3) durch mindestens einen gasdurchlässigen Auslaß (8) abgeführt wird, **dadurch gekennzeichnet, daß** das Pulver (6) schichtweise auf die Bauplattform aufgetragen und das gasdurchlässige Medium derart durchströmt wird, daß das Prozeßgas im wesentlichen laminar in den Bearbeitungsraum (2) gelangt.

2. Verfahren nach Anspruch 1, wobei im Bearbeitungsraum (2) ein Pulvervorratsbehälter (11) und/oder ein Pulverauffangbehälter (12) von unten mit Prozeßgas durchströmt wird/werden.

3. Verfahren nach Anspruch 1 oder 2, wobei das gasdurchlässige Medium (3) aus der folgenden Gruppe ausgewählt ist: Sinterfilter aus metallischen und/oder nichtmetallischen Materialien, Drahtgeflecht aus metallischen und/oder nichtmetallischen Materialien, Gewebelaminatfilter aus metallischen und/oder nichtmetallischen Materialien.

4. Verfahren nach einem der vorhergehenden Ansprüche, wobei der gasdurchlässige Auslaß (8) oben oder seitlich am Bearbeitungsraum (2) vorgesehen und/oder der Bearbeitungsraum (2) oben mit einem Fenster (9) zum Durchtritt der Laserstrahlung abgeschlossen ist.

5. Verfahren nach Anspruch 4, wobei der Auslaß (8) nach einer vorgegebenen Durchströmungszeit mit Prozeßgas vor oder während der Erzeugung des Temperaturzyklus geschlossen wird.

6. Verfahren nach einem der vorhergehenden Ansprüche, wobei als Prozeßgas Inertgas, Inertasgemische, reduzierende Gase oder Metallgase verwendet werden.

7. Verfahren nach einem der vorhergehenden Ansprüche, wobei durch das Prozeßgas das Pulver (6) und/oder die Pulvervorrats- (11) und/oder -auffangbehälter (12) sowie die Atmosphäre des Bearbeituhgsraums (2) von Fremdgasen und Feuchtigkeit gereinigt wird/werden.

8. Vorrichtung zur Durchführung des Verfahrens nach einem der vorhergehenden Ansprüche, mit einein Bearbeitungsraum (2) und einem Laser mit einer Ablenkeinheit und einer im Bearbeitungsraum (2) vorgesehenen Einrichtung zum Aufbringen von Pulver (6) auf die Bauplattform, wobei im unteren Bereich des Bearbeitungsraums (2) ein gasdurchlässiges Medium (3) vorgesehen ist, das einen mit einer Gaszuführung (4) versehenen Vorraum (5) vom Bearbeitungsraum (2) abteilt, **dadurch gekennzeichnet, daß** die Einrichtung zum Aufbringen von Pulver (6) eine Einrichtung (10) zum schichtweisen Auftragen von Pulver (6) auf die Bauplattform ist.

9. Vorrichtung nach Anspruch 8, wobei der Bearbeitungsraum (2) eine zumindest teilweise gasdurchlässige Abdeckung (8) aufweist.

10. Vorrichtung nach Anspruch 8 oder 9, wobei der Bearbeitungsraum (8) eine für Laserstrahlung durchlässige Abdeckung (9) aufweist.

11. Vorrichtung nach einem der Ansprüche 8 bis 10, wobei der Bearbeitungsraum (2) stromabwärts des gasdurchlässigen Mediums (3) seitlich oder in der Abdeckung (9) mindestens einen Auslaß (8) aufweist.

12. Vorrichtung nach einem der Ansprüche 8 bis 11, wobei das gasdurchlässige Medium (3) aus einem Sinterfilter aus metallischem und/oder nichtmetallischem Material, einem Drahtgeflecht aus metallischem und/oder nichtmetallischem Material, einem Gewebelaminatfilter aus metallischem und/oder nichtmetallischem Material, feinporigen Einrichtungen aus metallischem und/oder nichtmetallischem Material oder. aus mit Auslaßbohrungen versehenen Einrichtungen hergestellt ist.

13. Vorrichtung nach einem der Ansprüche 8 bis 12, wobei der Auslaß (8) verschließbar ist.

14. Vorrichtung nach. einem der Ansprüche 8 bis 13, wobei die Einrichtung zum schichtweisen Auftragen von Pulver (6) eine Abstreifeinheit (10) aufweist, die vorteilhafterweise über einem Pulvervorratsbehälter (11) hin- und herbewegbar ist.

15. Vorrichtung nach einem der Ansprüche 8 bis 14, wobei im Randbereich des Bearbeitungsraums (2) mindestens ein Pulverauffangbehälter (12) zur Aufnahme von Pulver (6) angeordnet ist.

16. Vorrichtung nach einem der Ansprüche 8 bis 15, wobei im Randbereich des Bearbeitungsraums (2) mindestens ein Pulvervorratsbehälter (11) vorgesehen ist.

17. Vorrichtung gemäß einem der Ansprüche 8 bis 16, wobei der Pulvervorratsbehälter (11) und/oder der Pulverauffangbehälter (12) gegenüber dem Vorraum (5) mit dem gasdurchlässigen Medium (3) abgeteit ist/sind.

18. Vorrichtung nach Anspruch 17, wobei das den Pulvervorratsbehälter (11) und/oder der Pulverauffangbehälter (12) gegenüber dem Vorraum (5) abteilende gasdurchlässige Material (3) in der Höhe verstellbar ist.

19. Vorrichtung nach einem der Ansprüche 8 bis 18, wobei die Bauplattform in der Höhe verstellbar ist.

20. Vorrichtung nach Anspruch 19, wobei die Bauplattform :durch das gasdurchlässige Medium (3) gebildet oder darauf abgestützt ist.

## Claims

1. A method for producing functional prototypes under a process gas atmosphere, whereby in a treatment chamber (2) powder is applied to a structural platform and a temperature cycle effecting a partial or complete melting of the powder is produced by means of laser radiation (1) at locations predetermined by CAD data, whereby process gas flows from underneath through the treatment chamber (2) and through a solid gas-permeable medium (3), and the process gas is carried away downstream from the gas-permeable medium (3) through at least one gas-permeable outlet (8),
**characterised in that** the powder (6) is applied layer-by-layer to the structural platform and the gas-permeable medium is flowed through in such a manner that the process gas arrives substantially in laminar fashion into the treatment chamber (2).

2. A method according to Claim 1, whereby in the treatment chamber (2) process gas flows from below through a powder storage tank (11) and/or a powder collecting tank (12).

3. A method according to Claim 1 or 2, whereby the gas-permeable medium (3) is selected from the following group: sintered filter made from metallic and/or non-metallic materials, wire mesh made from metallic and/or non-metallic materials, woven cloth laminate filter made from metallic and/or non-metallic materials.

4. A method according to one of the preceding Claims, whereby the gas-permeable outlet (8) is provided at the top or on the side of the treatment chamber (2) and or the treatment chamber (2) is sealed at the top with a window (9) for the passage of the laser radiation.

5. A method according to Claim 4, whereby the outlet (8) is closed after a predetermined flow time with process gas before or during the production of the temperature cycle.

6. A method according to one of the preceding Claims, whereby inert gas, inert gas mixtures, reducing gases or metal gases are used as the process gas.

7. A method according to one of the preceding Claims, whereby the powder (6) and/or the powder storage tank (11) and/or powder collecting tank (12) and also the atmosphere of the treatment chamber (2) is/are cleaned of foreign gases and moisture by the process gas.

8. A device for performing the method according to one of the preceding Claims, having a treatment chamber (2) and a laser with a deflection unit and a device provided in the treatment chamber (2) for applying powder (6) to the structural platform, wherein in the lower region of the treatment chamber (2) a gas-permeable medium (3) is provided, which divides an ante-chamber (5) provided with a gas supply (4) from the treatment chamber (2),
**characterised in that** the device for the application of the powder (6) is a device (10) for the layer-by-layer application of powder (6) to the structural platform.

9. A device according to Claim 8, wherein the treatment chamber (2) comprises an at least partially gas-permeable cover (8).

10. A device according to Claim 8 or 9, wherein the treatment chamber (8) comprises a cover (9) which is permeable for laser radiation.

11. A device according to one of Claims 8 to 10, wherein the treatment chamber (2) comprises at least one outlet (8) downstream from the gas-permeable medium (3) at the side or in the cover (9).

12. A device according to one of Claims 8 to 11, wherein the gas-permeable medium (3) is produced from a sintered filter made from metallic and/or non-metallic material, a wire mesh made from metallic and/or non-metallic material, a woven fabric laminate filter made from metallic and/or non-metallic material, fine-pore devices made from metallic or non-metallic material or from devices provided with outlet bores.

13. A device according to one of Claims 8 to 12, wherein the outlet (8) can be sealed.

14. A device according to one of Claims 8 to 13, wherein the device for the layer-by-layer application of powder (6) comprises a stripping unit (10), which can advantageously move backwards and forwards over a powder storage tank (11).

15. A device according to one of Claims 8 to 14, wherein at least one powder collecting tank (12) for receiving powder (6) is disposed in the edge region of the treatment chamber (2).

16. A device according to one of Claims 8 to 15, wherein at least one powder storage tank (11) is provided in the edge region of the treatment chamber (2).

17. A device according to one of Claims 8 to 16, wherein the powder storage tank (11) and/or the powder collecting tank (12) is/are divided from the ante-chamber (5) with the gas-permeable medium (3).

18. A device according to Claim 17, wherein the gas-permeable material (3) that divides the powder storage tank (11) and/or the powder collecting tank (12) from the ante-chamber (5) is height-adjustable.

19. A device according to one of Claims 8 to 18, wherein the structural platform is height-adjustable.

20. A device according to Claim 19, wherein the structural platform is formed by the gas-permeable medium (3) or is supported thereon.

## Revendications

1. Procédé de fabrication de modèles fonctionnels sous atmosphère gazeuse, dans lequel la poudre est déposée sur un plateau à l'intérieur d'un compartiment de traitement (2) et un rayonnement laser (1) est utilisé pour générer un cycle de température destiné à réaliser la fusion partielle ou complète de la poudre dans des zones définies par des données CAO, dans lequel le gaz du processus circule à travers le compartiment de traitement (2) en entrant par le bas en passant à travers un milieu solide perméable au gaz (3) et le gaz du processus est évacué en aval du milieu perméable au gaz (3) par au moins une sortie (8) laissant passer le gaz, **caractérisé en ce que** la poudre (6) est déposée en couches sur le plateau et le gaz du processus passe à travers le milieu perméable au gaz, de telle sorte que le gaz du processus parvient dans le compartiment de traitement (2) sensiblement sous forme de flux laminaire.

2. Procédé selon la revendication 1, dans lequel le compartiment de traitement (2) comporte une cuve de stockage de la poudre (11) et/ou une cuve de réception de la poudre (12), à travers laquelle/lesquelles passe le gaz du processus en entrant par le bas.

3. Procédé selon la revendication 1 ou 2, dans lequel le milieu perméable au gaz (3) est choisi dans les groupes suivants : filtres de frittage en matériaux métalliques et/ou non métalliques, grillages en fils métalliques et/ou non métalliques, filtres texturés lamellaires en matériaux métalliques et/ou non métalliques.

4. Procédé selon l'une des revendications précédentes, dans lequel la sortie (8) laissant passer le gaz est prévue en haut ou sur le côté du compartiment de traitement (2) et/ou le compartiment de traitement (2) est fermé sur le dessus par une fenêtre (9) laissant passer le rayonnement laser.

5. Procédé selon la revendication 4, dans lequel la sortie (8) est obturée après une durée prédéfinie de passage du gaz du processus, avant ou pendant le déroulement du cycle de température.

6. Procédé selon l'une des revendications précédentes, dans lequel le gaz du processus utilisé est un gaz inerte, un mélange de gaz inertes, des gaz réducteurs ou des gaz métalliques.

7. Procédé selon l'une des revendications précédentes, dans lequel, par l'action du gaz du processus, la poudre (6) et/ou la cuve de stockage de la poudre (11) et/ou la cuve de réception de la poudre (12), ainsi que l'atmosphère du compartiment de traitement (2) est/sont nettoyé(s) des gaz externes et de l'humidité.

8. Dispositif destiné à la mise en oeuvre du procédé selon l'une des revendications précédentes, comprenant un compartiment de traitement (2) et un laser avec une unité de diffraction et un dispositif prévu dans le compartiment de traitement (2) et destiné à déposer la poudre (6) sur le plateau, sachant que dans la partie inférieure du compartiment de traitement (2) il est prévu un milieu perméable au gaz (3), qui forme la séparation entre un compartiment d'entrée (5), muni d'une admission du gaz (4), et le compartiment de traitement (2), **caractérisé en ce que** le dispositif destiné à déposer la poudre (6) est un dispositif (10) destiné à déposer la poudre (6) par couches sur le plateau.

9. Dispositif selon la revendication 8, dans lequel le compartiment de traitement (2) comporte un couvercle (9) laissant passer au moins partiellement le gaz.

10. Dispositif selon la revendication 8 ou 9, dans lequel le compartiment de traitement (2) comporte un couvercle (9) laissant passer le rayonnement laser.

11. Dispositif selon l'une des revendications 8 à 10, dans lequel le compartiment de traitement (2) comporte en aval du milieu perméable au gaz (3) au moins une sortie (8) réalisée sur le côté ou dans le couvercle (9).

12. Dispositif selon l'une des revendications 8 à 11, dans lequel le milieu perméable au gaz (3) est formé par un filtre de frittage en matériau métallique et/ou non métallique, un grillage en fils métalliques et/ou non métalliques, un filtre texturé lamellaire en matériau métallique et/ou non métallique, des dispositifs à pores fins en matériau métallique et/ou non métallique ou par des dispositifs munis de forures de sortie.

13. Dispositif selon l'une des revendications 8 à 12, dans lequel la sortie (8) peut être obturée.

14. Dispositif selon l'une des revendications 8 à 13, dans lequel le dispositif destiné à déposer par couches la poudre (6) comporte une unité de raclage (10) qui, de manière avantageuse, peut être déplacée dans un mouvement de va-et-vient au-dessus d'une cuve de stockage de la poudre (11).

15. Dispositif selon l'une des revendications 8 à 14, dans lequel dans la zone bordant le compartiment de traitement (2) est disposée au moins une cuve de réception de la poudre (12) destinée à recevoir la poudre (6).

16. Dispositif selon l'une des revendications 8 à 15, dans lequel, dans la zone bordant le compartiment de traitement, (2) il est prévu au moins une cuve de stockage de la poudre (11).

17. Dispositif selon l'une des revendications 8 à 16, dans lequel la cuve de stockage de la poudre (11) et/ou la cuve de réception de la poudre (12) est/sont séparée(s) du compartiment d'entrée (5) par le milieu perméable au gaz (3).

18. Dispositif selon la revendication 17, dans lequel le milieu perméable au gaz (3), formant la séparation entre la cuve de stockage de la poudre (11) et/ou la cuve de réception de la poudre (12) par rapport au compartiment d'entrée (5), est réglable en hauteur.

19. Dispositif selon l'une des revendications 8 à 18, dans lequel le plateau est réglable en hauteur.

20. Dispositif selon la revendication 19, dans lequel le plateau est formé par le milieu perméable au gaz (3) ou est en appui sur celui-ci.
